# EUROPÄISCHE PATENTANMELDUNG

(11) **EP 1 108 825 A2**
(43) Veröffentlichungstag der Anmeldung: **20.06.2001**
(21) Anmeldenummer: 00890336.1
(22) Anmeldetag: 13.11.2000
(51) Int. Cl.: E04C 2/04

(54) **Verfahren zur Herstellung einer Bauplatte**

(30) Priorität: 11.11.1999 AT 78099 U
(71) Anmelder: Götzinger, Gernot, 2013 Göllersdorf (AT)
(72) Erfinder: Götzinger, Gernot, 2013 Göllersdorf (AT)
(74) Vertreter: Gibler, Ferdinand, Dipl.Ing. Dr. techn.

(57) **Zusammenfassung**

Verfahren zur Herstellung einer Bauplatte, insbesondere einer Bodenplatte, wobei eine aus einer Vorsatzbeton-Mischung gebildete, erste Schicht (1) mit relativ hohem Wasseranteil in eine Form (3) eingebracht und darauf eine aus einer Hinterbeton-Mischung gebildete, zweite Schicht (2) mit relativ niedrigem Wasseranteil auf die erste Schicht (1) aufgebracht wird und sodann das in der Form gebildete Zweischichtsystem gepreßt und der gepreßte Rohling entschalt wird. Die Betonmischungen der ersten und der zweiten Schicht (1, 2) weisen im wesentlichen die gleiche mineralische Zusammensetzung auf, wobei die Betonmischung für die erste Schicht (1) mit einem relativ hohen Wassergehalt und die Betonmischung für die zweite Schicht (2) mit einem relativ niedrigen Wassergehalt in die Form (3) eingebracht werden.

## Beschreibung

Die Erfindung betrifft ein Verfahren zur Herstellung einer Bauplatte, insbesondere einer Bodenplatte, wobei eine aus einer Vorsatzbeton-Mischung gebildete, erste Schicht mit relativ hohem Wasseranteil in eine Form eingebracht und darauf eine aus einer Hinterbeton-Mischung gebildete, zweite Schicht mit relativ niedrigem Wasseranteil auf die erste Schicht aufgebracht wird und sodann das in der Form gebildete Zweischichtsystem gepreßt und der gepreßte Rohling entschalt wird.

Bei einem bekannten Verfahren dieser Art ist die fertige Platte aus einer tragenden Hinterbeton-Schicht und aus einer die Sichtfläche bildenden Vorsatzbeton-Schicht zusammengesetzt. Für die Hinterbeton-Schicht wird dabei üblicherweise eine mechanisch robuste, grobkörnige Struktur gewählt, während die Vorsatzbeton-Schicht feinkörnig zusammengesetzt ist und nach den Anforderungen der gewünschten Sichtfläche gestaltet werden kann, wobei auch Farbstoffe zugesetzt werden können.

Bei der Herstellung einer solchen Platte wird die relativ trockene Betonmischung der zweiten Hinterbeton-Schicht durch hohen Druck auf die relativ feuchte erste Vorsatzbeton-Schicht gepreßt und dabei das überschüssige Wasser der ersten Schicht in die zweite Schicht bewegt, wodurch eine sehr schnelle Bindung des aus zwei Schichten gebildeten Systems erreicht wird.

Dadurch ist einerseits ein sehr schneller Produktionsablauf realisierbar, weil das Schichtsystem rasch entschalbar ist, und andererseits gewährleistet, daß Hinter- und Vorsatzbeton eine dauerhafte Verbindung miteinander eingehen.

Der Nachteil dieses bekannten Verfahrens besteht darin, daß die Seitenansicht einer solcherart hergestellten Platte die Zusammensetzung aus zwei unterschiedlichen Schichten erkennen läßt und daher relativ unansehnlich wirkt.

Aufgabe der Erfindung ist es daher, ein Verfahren der eingangs genannten Art anzugeben, mit dem eine Bauplatte herstellbar ist, die in Seitenansicht oder im Querschnitt gesehen eine homogene Struktur aufweist.

Erfindungsgemäß wird dies dadurch erreicht, daß die Betonmischungen der ersten und der zweiten Schicht im wesentlichen die gleiche mineralische Zusammensetzung aufweisen, wobei die Betonmischung für die erste Schicht mit einem relativ hohen Wassergehalt und die Betonmischung für die zweite Schicht mit einem relativ niedrigen Wassergehalt in die Form eingebracht werden.

Auf diese Weise kann eine Bauplatte hergestellt werden, die eine im wesentlichen gleichmäßig strukturierte Seitenansicht bzw. einen homogenen Querschnitt aufweist, sodaß die erfindungsgemäß hergestellte Bauplatte von der Seite betrachtet die Schichtenbildung bei der Herstellung nicht erkennen läßt. Dadurch können die erfindungsgemäß hergestellten Bauplatten nicht nur für die flächendeckende Verlegung sondern auch für den seitlichen Abschluß und ähnliche. die seitliche Ansicht der Bauplatten freigebende, bauliche Bereiche verwendet werden, bei denen die Bauplatten seitlich sichtbar werden bzw. bei denen die Seitenflächen der erfindungsgemäß hergestellten Bauplatten eine Abschlußfläche bilden, die sichtbar ist.

Weiters betrifft die Erfindung eine Bauplatte, insbesondere Bodenplatte, bestehend aus einer Vorsatzbeton-Schicht und einer Hinterbeton-Schicht,

Aufgabe der Erfindung ist es, eine Bauplatte anzugeben, die in Seitenansicht oder im Querschnitt gesehen eine homogene Struktur aufweist.

Erfindungsgemäß wird dies dadurch erreicht, daß die Vorsatzbeton-Schicht und die Hinterbeton-Schicht im wesentlichen die gleiche mineralische Zusammensetzung aufweisen.

Auf diese Weise erhält die erfindungsgemäße Bauplatte eine im Querschnitt gesehen im wesentlichen durchgehend homogene Strukturierung, sodaß deren Seitenansicht keinen Schichtenaufbau erkennen läßt.

In weiterer Ausbildung der Erfindung kann die Vorsatzbeton-Schicht und die Hinterbeton-Schicht einen gleichen Sandanteil mit einer Körnung von 0 mm bis 4 mm umfassen.

Durch den gleichen Sandanteil in der Vorsatzbeton- und in der Hinterbeton-Schicht verursacht auch der sehr feinkörnige Sand innerhalb der Strukturierung der erfindungsgemäßen Bauplatte keine Inhomogenitäten.

Gemäß einem weiteren Ausführungsbeispiel der Erfindung kann der Sandanteil durch Dolomitsand oder Schleifsand gebildet sein, welcher die Beständigkeit der erfindungsgemäßen Bauplatte gegen äußere chemische Einflüsse erhöht.

Ein weiteres Ausführungsbeispiel der Erfindung kann dadurch gegeben sein, daß die Vorsatzbeton-Schicht und die Hinterbeton-Schicht einen gleichen Feinkornanteil mit einer Körnung im Bereich von 1 mm bis 7 mm umfassen.

Auf diese Weise verhilft der gleich gewählte Feinkornanteil für die Vorsatzbeton-Schicht und die Hinterbeton-Schicht der erfindungsgemäßen Bauplatte zu einer durchgehend homogenen Verteilung des Feinkornanteils.

In bevorzugter Weise kann der Feinkornanteil durch Marmorsplitt oder Quarzporphyr mit einer Körnung im Bereich von 1 mm bis 3 mm gebildet sein.

Eine weitere Fortbildung der Erfindung kann dadurch gegeben sein, daß der Feinkornanteil durch Splitt mit einer Körnung im Bereich von 2 mm bis 4 mm gebildet ist.

Es kann auch vorgesehen sein, daß der Feinkornanteil durch Granit mit einer Körnung im Bereich von 2 mm bis 6 mm gebildet ist.

Eine weitere Variante der Erfindung kann darin bestehen, daß der Feinkornanteil durch Quarzporphyr mit einer Körnung im Bereich von 3 mm bis 5 mm gebildet ist.

Die vorgenannten besonderen Feinkornanteil-Zusammensetzungen ermöglichen die Produktion einer hochwertigen Bauplatte mit einer hohen Lebensdauer.

Gemäß einer weiteren Ausführungsform der Erfindung kann die Vorsatzbeton-Schicht und die Hinterbeton-Schicht einen gleichen Grobkornanteil mit einer Körnung im Bereich von 4 mm bis 20 mm umfassen.

In weiterer Ausgestaltung der Erfindung kann der Grobkornanteil durch Marmorsplitt mit einer Körnung im Bereich von 7 mm bis 12 mm gebildet sein.

Eine weitere Ausführungsform der Erfindung kann darin bestehen, daß der Grobkornanteil durch Porphyr mit einer Körnung im Bereich von 8 mm bis 12 mm und/oder im Bereich von 4 mm bis 8 mm gebildet ist.

Weiters kann vorgesehen sein, daß der Grobkornanteil durch Quarzporphyr mit einer Körnung im Bereich von 5 mm bis 12 mm gebildet ist.

Die vorgenannten Grobkornanteile ermöglichen eine mechanisch feste Zusammensetzung, wodurch die erfindungsgemäße Bauplatte auch gegen höhere Belastungen beständig ist.

In weiterer Ausbildung der Erfindung kann die Vorsatzbeton-Schicht und die Hinterbeton-Schicht den gleichen Zementanteil umfassen, wodurch sich im Querschnitt gesehen eine optisch homogene Gestaltung ergibt.

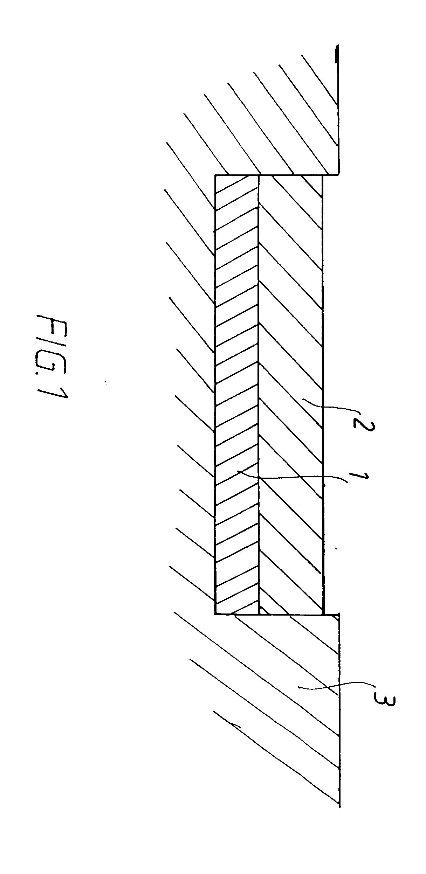

Nachfolgend wird die Erfindung anhand des in der Zeichnung Fig. 1 dargestellten Ausführungsbeispiels eingehend erläutert. Fig.1 zeigt einen Schnitt durch einen nach einer Ausführungsform des erfindungsgemäßen Verfahrens hergestellten Bauplatten-Rohling vor der Entformung.

Nach dem erfindungsgemäßen Verfahren zur Herstellung einer Bauplatte, insbesondere einer Bodenplatte wird zunächst eine aus einer Vorsatzbeton-Mischung gebildete, erste Schicht 1 mit relativ hohem Wasseranteil in eine Form 3 eingebracht und darauf eine aus einer Hinterbeton-Mischung gebildete, zweite Schicht 2 mit relativ niedrigem Wasseranteil auf die erste Schicht 1 aufgebracht. Sodann wird das in der Form 3 gebildete Zweischichtsystem gepreßt und der gepreßte Rohling entschalt.

Um einen optisch homogenen Eindruck der ausgehärteten Bauplatte zu ermöglichen, weisen erfindungsgemäß die Zementmischungen der ersten und der zweiten Schicht 1, 2 im wesentlichen die gleiche mineralische Zusammensetzung auf, wobei die Zementmischung für die erste Schicht 1 mit einem relativ hohen Wassergehalt und die Zementmischung für die zweite Schicht 2 mit einem relativ niedrigen Wassergehalt in die Form 3 eingebracht werden.

### Beispiele für die mögliche Zusammensetzung einer erfindungsgemäßen Bauplatte

In allen Beispielen weisen die Vorsatzbeton-Schicht und die Hinterbeton-Schicht den gleichen Zementanteil auf.

### Beispiel 1: Platte Gelb/Braun

### Angaben beziehen sich auf 1 m³ Fertigprodukt (Platte)

| | | |
|---|---|---|
| **Vorsatzbeton** | 290 kg | Schleifsand |
| | 625 kg | Ernstbrunner Splitt 2/4 mm |
| | 430 kg | Porphyr 8/12 mm |
| | 190 kg | Porphyr 4/8 mm |
| | 005 kg | Eisenoxidfarbe Gelb 420 |
| | 310 kg | Weißzement |
| | | |
| | 165 Liter | Wasser |

| | | |
|---|---|---|
| **Hinterbeton** | 290 kg | Schleifsand |
| | 625 kg | Ernstbrunner Splitt 2/4 mm |
| | 430 kg | Porphyr 8/12 mm |
| | 190 kg | Porphyr 4/8 mm |
| | 005 kg | Eisenoxidfarbe Gelb 420 |
| | 310 kg | Weißzement |
| | | |
| | 125 Liter | Wasser |

Die Vorsatzbeton-Schicht und die Hinterbeton-Schicht umfassen den gleichen Sandanteil, welcher durch Schleifsand gebildet ist. Weiters umfassen die Vorsatzbeton-Schicht und die Hinterbeton-Schicht einen gleichen Feinkornanteil mit einer Körnung im Bereich von 1 mm bis 7 mm, insbesondere Ernstbrunner Splitt mit einer Körnung im Bereich von 2mm bis 4mm. Der Grobkornanteil ist ebenfalls für beide Schichten mit Porphyr 8mm bis 12mm und 4mm bis 8mm im Körnungsbereich von 4mm bis 20mm gleich.

### Beispiel 2: Platte Blau/Weiß

### Angaben beziehen sich auf 1 m³ Fertigprodukt (Platte)

| | | |
|---|---|---|
| **Vorsatzbeton**: | 445 kg | Dolomitsand 0/4 mm |
| | 400 kg | Strennberger Marmorsplitt 1/3 mm |
| | 170 kg | Granitkörnung Inka-Blau 2/6 mm |
| | 510 kg | Strennberger Marmorsplitt 7/12 mn |
| | 315 kg | Weißzement |
| | | |
| | 160 Liter | Wasser |

| | | |
|---|---|---|
| **Hinterbeton**: | 445 kg | Dolomitsand 0/4 mm |
| | 400 kg | Strennberger Marmorsplitt 1/3 mm |
| | 170 kg | Granitkörnung Inka-Blau 2/6 mm |
| | 510 kg | Strennberger Marmorsplitt 7/12 mm |
| | 315 kg | Weißzement |
| | | |
| | 125 Liter | Wasser |

Die Vorsatzbeton-Schicht und die Hinterbeton-Schicht umfassen den gleichen Sandanteil mit einer Körnung im Bereich von Omm bis 4mm, welcher durch Dolomitsand gebildet ist. Weiters umfassen die Vorsatzbeton-Schicht und die Hinterbeton-Schicht einen gleichen Feinkornanteil mit einer Körnung im Bereich von 1 mm bis 7 mm, insbesondere Strennberger Marmorsplitt mit einer Körnung im Bereich von 1 mm bis 3 mm und Granitkörnung im Bereich von 2 bis 6 mm. Der Grobkornanteil im Bereich von 4mm bis 20mm ist ebenfalls für beide Schichten mit Strennberger Marmorsplitt mit einer Körnung von 7 mm bis 12mm gleich.

### Beispiel 3: Platte Rot

### Angaben beziehen sich auf 1 m³ Fertigprodukt (Platte)

| | | |
|---|---|---|
| **Vorsatzbeton:** | 345 kg | Dolomitsand 0/4 mm |
| | 250 kg | Quarzporphyr 1/3 mm |
| | 320 kg | Quarzporphyr 3/5 mm |
| | 615 kg | Quarzporphyr 5/12 mm |
| | 011 kg | Eisenoxidfarbe Rot |
| | 0,6 Liter | Ausblühschutz |
| | 320 kg | Grauzement |
| | | |
| | 165 Liter | Wasser |

| | | |
|---|---|---|
| **Hinterbeton:** | 345 kg | Dolomitsand 0/4 mm |
| | 250 kg | Quarzporphyr 1/3 mm |
| | 320 kg | Quarzporphyr 3/5 mm |
| | 615 kg | Quarzporphyr 5/12 mm |
| | 011 kg | Eisenoxidfarbe Rot |
| | 0,6 Liter | Ausblühschutz |
| | 320 kg | Grauzement |
| | | |
| | 125 Liter | Wasser |

Die Vorsatzbeton-Schicht und die Hinterbeton-Schicht umfassen den gleichen Sandanteil mit einer Körnung im Bereich von Omm bis 4mm, welcher durch Dolomitsand gebildet ist. Weiters umfassen die Vorsatzbeton-Schicht und die Hinterbeton-Schicht einen gleichen Feinkornanteil mit einer Körnung im Bereich von 1 mm bis 7 mm, insbesondere Quarzporphyr mit einer Körnung im Bereich von 1 mm bis 3 mm und Quarzporphyr mit einer Körnung im Bereich von 3 bis 5 mm. Der Grobkornanteil im Bereich von 4mm bis 20mm ist ebenfalls für beide Schichten mit Quarzporphyr mit einer Körnung von 5 mm bis 12 mm gleich.

## Patentansprüche

1. Verfahren zur Herstellung einer Bauplatte, insbesondere einer Bodenplatte, wobei eine aus einer Vorsatzbeton-Mischung gebildete, erste Schicht mit relativ hohem Wasseranteil in eine Form eingebracht und darauf eine aus einer Hinterbeton-Mischung gebildete, zweite Schicht mit relativ niedrigem Wasseranteil auf die erste Schicht aufgebracht wird und sodann das in der Form gebildete Zweischichtsystem gepreßt und der gepreßte Rohling entschalt wird, **dadurch gekennzeichnet**, daß die Betonmischungen der ersten und der zweiten Schicht (1, 2) im wesentlichen die gleiche mineralische Zusammensetzung aufweisen, wobei die Betonmischung für die erste Schicht (1) mit einem relativ hohen Wassergehalt und die Betonmischung für die zweite Schicht (2) mit einem relativ niedrigen Wassergehalt in die Form (3) eingebracht werden.

2. Bauplatte, insbesondere Bodenplatte, bestehend aus einer Vorsatzbeton-Schicht und einer Hinterbeton-Schicht, **dadurch gekennzeichnet**, daß die Vorsatzbeton-Schicht und die Hinterbeton-Schicht im wesentlichen die gleiche mineralische Zusammensetzung aufweisen.

3. Bauplatte nach Anspruch 2, **dadurch gekennzeichnet**, daß die Vorsatzbeton-Schicht und die Hinterbeton-Schicht einen gleichen Sandanteil mit einer Körnung von 0 mm bis 4 mm umfassen.

4. Bauplatte nach Anspruch 3, **dadurch gekennzeichnet**, daß der Sandanteil durch Dolomitsand oder Schleifsand gebildet ist.

5. Bauplatte nach einem der Ansprüche 2, 3 oder 4, **dadurch gekennzeichnet**, daß die Vorsatzbeton-Schicht und die Hinterbeton-Schicht einen gleichen Feinkornanteil mit einer Körnung im Bereich von 1 mm bis 7 mm umfassen.

6. Bauplatte nach Anspruch 5, **dadurch gekennzeichnet**, daß der Feinkornanteil durch Marmorsplitt oder Quarzporphyr mit einer Körnung im Bereich von 1 mm bis 3 mm gebildet ist.

7. Bauplatte nach Anspruch 5, **dadurch gekennzeichnet**, daß der Feinkornanteil durch Splitt mit einer Körnung im Bereich von 2 mm bis 4 mm gebildet ist.

8. Bauplatte nach Anspruch 5 oder 6, dadurch gekennzeichnet, daß der Feinkornanteil durch Granit mit einer Körnung im Bereich von 2 mm bis 6 mm gebildet ist.

9. Bauplatte nach Anspruch 5, 6 oder 7, **dadurch gekennzeichnet**, daß der Feinkornanteil durch Quarzporphyr mit einer Körnung im Bereich von 3 mm bis 5 mm gebildet ist.

10. Bauplatte nach einem der Ansprüche 2 bis 9, **dadurch gekennzeichnet**, daß die Vorsatzbeton-Schicht und die Hinterbeton-Schicht einen gleichen Grobkornanteil mit einer Körnung im Bereich von 4 mm bis 20 mm umfassen.

11. Bauplatte nach Anspruch 10, **dadurch gekennzeichnet,** daß der Grobkornanteil durch Marmorsplitt mit einer Körnung im Bereich von 7 mm bis 12 mm gebildet ist.

12. Bauplatte nach Anspruch 10, **dadurch gekennzeichnet,** daß der Grobkornanteil durch Porphyr mit einer Körnung im Bereich von 8 mm bis 12 mm und/oder im Bereich von 4 mm bis 8 mm gebildet ist.

13. Bauplatte nach Anspruch 10, **dadurch gekennzeichnet**, daß der Grobkornanteil durch Quarzporphyr mit einer Körnung im Bereich von 5 mm bis 12 mm gebildet ist.

14. Bauplatte nach einem der vorhergehenden Ansprüche 2 bis 13, **dadurch gekennzeichnet,** daß die Vorsatzbeton-Schicht und die Hinterbeton-Schicht den gleichen Zementanteil umfassen.
